# EUROPEAN PATENT APPLICATION

(11) **EP 4 538 137 A1**
(43) Date of publication of application: **16.04.2025**
(21) Application number: 23203335.7
(22) Date of filing: 12.10.2023
(51) Int. Cl.: B60W 50/12, B60K 28/14, B60W 40/09, B60W 30/08, B60W 40/08

(54) **METHOD FOR DETECTING AN UNINTENDED ACCELERATION OF A VEHICLE**

(71) Applicant: Volvo Car Corporation, 405 31 Göteborg (SE)
(72) Inventor: DHINGRA, Vishisht, 40531 Göteborg (SE)
(74) Representative: Maiwald GmbH

(57) **Abstract**

The disclosure relates to a method (100) for detecting an unintended acceleration of a vehicle (10), the method (100) comprising:
- obtaining first data (1) indicative of an accident of the vehicle (10),
- obtaining second data (2) indicative of an acceleration of the vehicle (10) after the accident, and
- detecting the unintended acceleration based on the first data (1) and the second data (2).

## Description

### TECHNICAL FIELD

The present disclosure relates to a method for detecting an unintended acceleration of a vehicle, a computer program product, a data processing apparatus, and a vehicle comprising the data processing apparatus.

### BACKGROUND ART

It has been observed that vehicles may be unintendedly accelerated for various reasons and that this may lead to an accident. Such an unintended acceleration may base on poor judgement by the driver, impairment of the driver to drive the vehicle, or an error of the vehicle, for example. In any of these cases, modem vehicles with autonomic driving capabilities should be able to detect the unintended acceleration and decelerate automatically.

However, even with the various sensors and cameras on board of at least partially autonomous vehicles and the thereby enabled predictive driving, it may be difficult for the vehicle to certainly determine when the acceleration is unintended in a timely manner. At that time, it may be too late to decelerate the vehicle and an accident may be immanent. Further, when the acceleration is based on an error of the vehicle, the vehicle may not be able to detect the unintended acceleration at all.

### SUMMARY

The above problem is at least partially solved or alleviated by the subject matter of the independent claims of the present disclosure, wherein further examples are incorporated in the dependent claims.

According to a first aspect, there is provided a method for detecting an unintended acceleration of a vehicle, the method comprising:
- obtaining first data indicative of an accident of the vehicle,
- obtaining second data indicative of an acceleration of the vehicle after the accident, and
- detecting the unintended acceleration based on the first data and the second data.

Accordingly, the method provides for a reliable detection of an unintended acceleration by obtaining the first data indicative of an accident of the vehicle. This, together with the second data, which indicates that the vehicle is further accelerated after the accident, enables a higher level of certainty that the acceleration after the accident is unintended, e.g., due to an error of the vehicle or the driver being impaired to drive the vehicle, which may be due to the accident or an event before that and possibly leading to the accident. Accordingly, restrictive measures, such as automatic emergency braking, to get the situation under control and to prevent further accidents are justified based on the certainty with which the unintended acceleration is detected. Due to the high certainty of the unintended acceleration, a driver of the vehicle may be not or at least much less confronted with restrictive measures such as automatic emergency braking due to false detection.

The first data may be indicative of an accident of the vehicle which does not impair the vehicle from driving further. Such accidents are herein also referred to as small accidents. For example, such accident may be a sideswiping of another vehicle or object. Alternatively, or additionally, such accident may be a collision of the vehicle with one or more static objects, e.g., a road sign or guardrail, objects smaller than the vehicle and/or vulnerable road users, e.g., pedestrians. In such cases, an unintended acceleration may be continued despite the accident and endanger the occupants of the vehicle as well as other road users further, when the vehicle is not being decelerated. As explained, when the vehicle has an error or the driver is impaired in his driving, and the vehicle has no means to establish this, the vehicle may continue with the unintended acceleration. However, with the method of the first aspect, the unintended acceleration may be detected based on the obtained first data and the obtained second data, where the accident and acceleration after the accident, are being used as determinants for the detection of the unintended acceleration.

In the method, the first data and the second data may be obtained from one or more systems of the vehicle. For example, the first data may be obtained from a collision detection system of the vehicle, which may comprise one or more sensors and/or one or more actuators of s safety restraint system, such as an air bags, a safety belt, a pressure-tube based pedestrian protection system etc., for example. For example, the sensor may be an accelerometer. For example, the collision detection system or a control unit thereof may, based on an indication from the one or more sensors, detect a collision and thereby provide the first data and, optionally, trigger one or more of the actuators of the safety restraint systems. For example, the second data may be obtained from a driving system of the vehicle, which may comprise one or more sensors for determining an acceleration. For example, one or more wheel mounted sensors and/or a GPS sensor may be used by a control unit of the driving system to determine the second data. All steps of the method may be carried out by a data processing apparatus, which may comprise a processor and a computer program product as further described herein. Instead of obtaining the first data and the second data, the data processing apparatus may be configured to determine the first data and the second data, e.g., based on data, such as collision sensor readings, wheel rotation sensor readings, GPS location readings, etc., obtained from the collision detection system and the driving system of the vehicle. Also, the detecting of the unintended acceleration may be carried out as a determination based on the first data and the second data.

The method may be at least partly computer-implemented, wherein one, multiple or all the steps of the method may be carried out by a computer. The method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the unintended acceleration may be detected if at least one first condition is satisfied by the first data and at least one second condition is satisfied by the second data. The at least one first condition may be indicative of at least one of a type and number of sensors and/or actuators of the vehicle being triggered in response to the accident.

The at least one second condition may be indicative of at least one of a magnitude and duration of an acceleration. The respective conditions may be predefined and compared to the respective data for determining whether a respective condition is satisfied or not. For example, if the first condition is indicative of a type of one or more sensors, the first condition may require that this type of sensor or sensors is or are being triggered based on the first data. For example, it may require that certain collision sensors are triggered, e.g., mounted at sides of the vehicle rather than in the front, thereby indicating a small accident at the vehicle sides, e.g., sideswiping, rather than a potentially more severe front collision based on one or more collision sensors mounted at the front of the vehicle. For example, if the first condition is indicative of a type of one or more actuators, this may be an actuator, such as an electric motor, for tensioning the safety belt and not be an actuator for deploying an airbag. Accordingly, such first condition, if satisfied, may be indicative of a small accident rather than a comparatively severer accident, where airbags have been deployed to protect the occupants of the vehicle from a collision. For example, if the second condition is indicative of a magnitude of an acceleration, this may be given with respect to a maximum acceleration, e.g., based on an acceleration pedal position or a cruise control function. For example, such magnitude of acceleration may be at least 80 %, at least 90 % or substantially 100 % of maximum acceleration or fully depressed acceleration pedal. For example, if the second condition is indicative of a duration of an acceleration, such duration may be a few seconds, e.g., at least five or at least ten seconds. The second condition may in particular be indicative of both, the magnitude of acceleration and the duration of acceleration, in particular in the form of a predefined magnitude of acceleration for a predefined duration of acceleration.

According to an example, method may further comprise obtaining third data indicative of a driver of the vehicle being impaired to drive the vehicle, the detecting of the unintended acceleration being further based on the third data. Thereby, another determinant is provided for determining an unintended acceleration with almost certainty and for the case of an impairment of the driver. Similarly to the previously mentioned steps, the obtaining of the third data may also be a determination step and may be carried out by the data processing apparatus. The third data may be obtained from or determined based on data from an impairment determination system, which may, for example, include a driver monitoring system of the vehicle, as will be explained further below.

According to an example, the unintended acceleration may be detected if at least one first condition is satisfied by the first data, at least one second condition is satisfied by the second data and at least one third condition is satisfied by the third data. The at least one first condition may be indicative of at least one of a type and number of sensors and/or actuators of the vehicle being triggered in response to the accident, in particular as described above. The at least one second condition may be indicative of one of a magnitude and duration of an acceleration, in particular as described above. The at least one third condition may be indicative of at least one of a magnitude and duration of the impairment of the driver. For example, if the third condition is indicative of a magnitude of the impairment of the driver, this may be given with respect to a number of physical functions that the driver is able to perform and as may be detected by a vehicle control interface based on input thereon, e.g., pressing a pedal or steering with the steering wheel. Alternatively, or additionally, the driver may be monitored by a driver monitoring system, as described further below, for example, and the magnitude of the impairment may be reflected by the monitored physical functions of the driver, e.g., consciousness, speech, eye movement, etc. Based thereon, in particular, a score of impairment of the driver may be determined. For example, if the driver is conscious but the vehicle does not receive any driver input from him, the score may be lower than compared to when the driver is conscious and steering the vehicle. Also, it may be possible to determine the magnitude of impairment based on a number of steering requests at the steering wheel, e.g., when these are quick and/or alternating, which may be reflecting an erratic driving behavior. The third condition may in particular be indicative of both, the magnitude of impairment and the duration of impairment, in particular in the form of a predefined magnitude, in particular score, of impairment for a predefined duration of impairment.

According to an example, the third data may be based on a determination of a health condition of the driver. For example, the health condition of the driver may be a seizure or unconsciousness. When such health condition is determined, the certainty with which the unintended acceleration may be detected may be even further increased.

According to an example, the health condition of the driver may be determined by at least one of a driver monitoring system of the vehicle and a wearable device communicatively couplable with the vehicle. The driver monitoring system may for example include one or more movement tracking devices for tracking at least one movement of the driver, and which may include one or more camera and/or one or more sensors. For example, such movement tracking device or devices may be configured to track at least one of an eye movement, a head movement, an extremities movement, face expressions, etc. of the driver. The wearable device may be a smart watch and/or a fitness tracker, for example. It may be configured for detecting vital parameters of the driver, such as heartbeat, and transmit this via the communicative, in particular wireless, coupling to the vehicle. Based upon the data from such movement tracking device(s) and/or from the wearable device, it may be assessed whether the driver is unconscious or has a seizure, for example. If the driver is unconscious or has a seizure, the third data may be provided and obtained.

According to an example, the third data may be based on an observation of the driving behavior of the driver of the vehicle. This may be additional or alternative to the above-described determination of the health condition of the driver. For example, such observation may be based on the driver input on a driver control interface, e.g., the steering wheel, gas and/or brake pedal, as may be determined by a corresponding sensor thereof. The driver control interface may be part of the driving system as mentioned above. Additionally, or alternatively, for example, such observation may be based on data from a road detection system, e.g., including a camera and/or sensor, configured for detecting lanes on the road travelled by the vehicle. Such road detection system may also be part of the driving system mentioned above. Such data may be processed to determine lane changes. A determined number of lane changes per time may be compared to a threshold. If the threshold is met, the third data may be obtained. The threshold may be indicative of the impairment of the driver, in particular of an erratic driving behavior of the driver.

According to an example, the second data may be based on a processing of a driver input on a vehicle control interface of the vehicle. Accordingly, the second data may be obtained based on data indicative of the driver input on the vehicle control interface, as may be determined by one or more sensors of the vehicle control interface, for example.

According to an example, the driver input may be at least one of an actuation of an acceleration pedal of the vehicle control interface and a steering of a steering wheel of the vehicle control interface. Accordingly, the unintended acceleration may be detected as being based on the driving behavior of the driver, e.g., due to an impairment of the driver as described above.

According to an example, the second data may be based on an acceleration control request by a vehicle control system of the vehicle, the vehicle control system being configured for at least partially autonomously controlling the vehicle. At least partially autonomously controlling the vehicle may mean that the vehicle control system may only autonomously control one function of the vehicle, e.g., controlling the speed of the vehicle, but not all driving functions of the vehicle, e.g., leaving the steering to the driver. The acceleration control request by the vehicle control system may be alternative or additional to the above-described processing of the driver input as basis for the second data. Such vehicle control system may be part of the driving system mentioned above.

According to an example, the acceleration control request may be a cruise control request from a cruise control of the vehicle control system. For example, it may be possible that the cruise control requests acceleration for accelerating the vehicle to a speed prior to the accident while the driver is impaired to cancel the cruise control request, or the driver unintendedly activates the cruise control.

According to an example, the method may further comprise providing vehicle control data configured for being used by the vehicle to decelerate the vehicle upon detecting the unintended deceleration. The vehicle control data may in particular be configured for being used by the vehicle to stop, in particular via automatic emergency braking, the vehicle. Further, the method may comprise carrying out the vehicle control data, in particular by the above mentioned driving system of the vehicle, thereby decelerating, in particular stopping, the vehicle.

According to a second aspect, there is provided a computer program product comprising instructions which, when the program is executed by a computer, cause the computer to carry out the method of the first aspect. The computer program product may be a computer program as such or a product, e.g., a computer readable medium, having stored the computer program thereon.

According to a third aspect, there is provided a data processing apparatus comprising means for carrying out the method of the first aspect. The means may be a computer, e.g., include a processor and a computer readable medium, particularly the one described above with respect to the computer program product of the second aspect.

The data processing apparatus and/or the computer program product may comprise modules for each one of the steps of the method as described herein. For example, there may be an obtaining module for obtaining the first data and the second data, and optionally the third data. Further, there may be a detecting module for detecting the unintended acceleration. The modules may be implemented in hardware and/or software.

According to a fourth aspect, there is provided a vehicle comprising the data processing apparatus of the third aspect.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a vehicle according to an aspect of this disclosure; and
- Figure 2: shows a schematic illustration of a method according to an aspect of this disclosure.

### DETAILED DESCRIPTION

The Figures are merely schematic representations and serve only to illustrate examples of the disclosure. Identical or equivalent elements are in principle provided with the same reference signs.

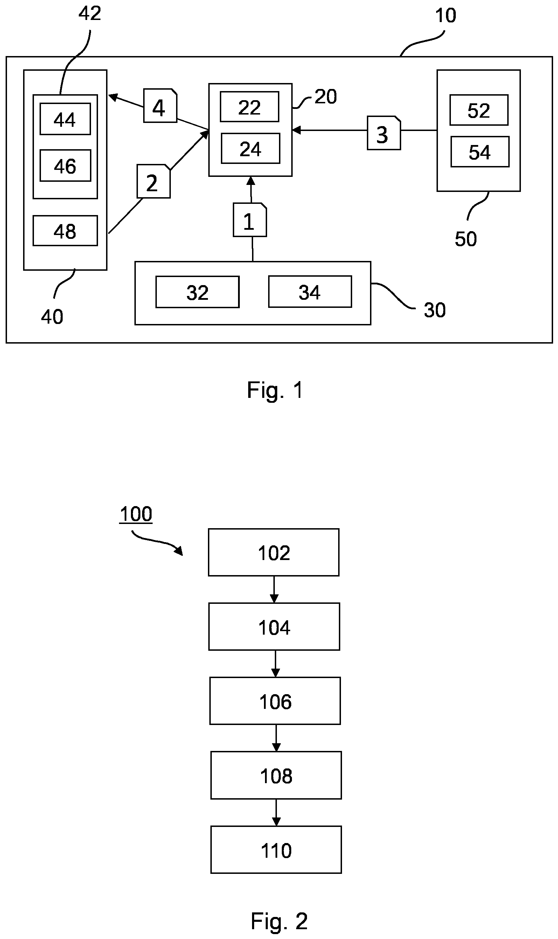

Figure 1 shows a schematic illustration of a vehicle 10, which may be a car, in particular a passenger car, for example. The vehicle 10 may be configured for partial or full autonomous driving.

The vehicle 10 comprises a data processing apparatus 20, which comprises a processor 22 and a computer program product 24, which may be a computer program as such or a computer-readable storage medium, on which a computer program may be stored. When the data processing apparatus 20 executes the computer program of the computer program product 24 by virtue of its processor 22, the method 100 as schematically illustrated in Fig. 2 may be carried out.

The vehicle 10 further comprises a first system 30, a second system 40, and a third system 50. The systems 30, 40, 50 are illustrated herein only schematically as separate systems and may instead of being separate systems 30, 40, 50 partially or fully overlap in their elements and/or functions with each other and/or the data processing apparatus 20. For example, the data processing apparatus 20 may be a central computer of the vehicle 10, which serves in part or fully several functions of the vehicle 10, e.g., road detection, autonomous driving, etc. Accordingly, the illustration of Fig. 1 is merely meant for better explaining the disclosure and not to limit the scope thereof.

The first system 30 may be configured for providing first data 1 indicative of an accident of the vehicle 10. In step 102 of method 100 of Fig. 2, such first data 1 may be obtained by the data processing apparatus 20 as shown in Fig. 1.

The first system 30 may be configured for detecting the accident of the vehicle 10. Accordingly, it may also be referred to as a collision detection system herein. For example, the first system 30 may comprise at least one sensor 32 and/or at least one actuator 34, as illustrated in Fig. 1. The at least one sensor 32 may be configured to generate a signal or the first data 1 indicative of the accident of the vehicle 10 upon collision of the vehicle 10 with an object activating the at least one sensor 32, i.e., generating the signal or first data 1. Correspondingly, the first system 30 may provide the first data 1 to the data processing apparatus 20. Alternatively, or additionally, the first data 1 may be obtained by the data processing apparatus 20 when the at least one actuator 34 is triggered. For example, the at least one actuator 34 may be an electric motor for tensioning a safety belt or an actuator for deploying an airbag.

The second system 40 may be configured for providing second data 2 indicative of an acceleration of the vehicle 10 after the accident. The second system 40 may also be referred to herein as a driving system. In step 104 of method 100 of Fig. 2, such second data 2 may be obtained by the data processing apparatus 20 as shown in Fig. 1.

The second system 40 may be configured for determining an acceleration of the vehicle 10 after the accident. For example, the second system 40 may comprise a vehicle control interface 42 and/or a vehicle control system 48 configured for at least partially autonomously controlling the vehicle 10. The vehicle control interface 42 may be configured such that it may receive a driver input from the driver, which may be processed to determine the second data 2. For example, the driver control interface 42 may comprise an acceleration pedal 44 and/or a steering wheel 46. Accordingly, for example, the acceleration after the accident may be determined based on a pedal position of the acceleration pedal 44, which may be measured by a sensor of the acceleration pedal 44, for example. Additionally, or alternatively, the vehicle control system 48 may determine the acceleration for the second data 2. For example, the vehicle control system 48 may comprise a cruise control and the acceleration after the accident may be determined based on an acceleration control request by the cruise control.

The third system 50 may be configured for providing third data 3 indicative of the driver of the vehicle 10 being impaired to drive the vehicle 10. In step 106 of method 100 of Fig. 2, such third data 3 may be obtained by the data processing apparatus 20 as shown in Fig. 1.

The third system 50 may be configured for determining the impairment of the driver and may be referred to herein also as an impairment determination system. For example, the third system 50 may comprise a driver monitoring system 52 and/or a wearable device 54 or an interface for communicatively coupling to such a wearable device 54, which may be separate from the vehicle 10. The driver monitoring system 52 may track the movement of the driver, e.g., eye movement, head movement, etc. and thereby allow for a determination of a health condition of the driver, such as a seizure or unconsciousness, in order to determine the impairment of the driver. The wearable device 54 may determine vital parameters of the driver and thereby allow for a determination of a health condition of the driver. In combination of the driver monitoring system 52 and the wearable device 54, a particularly accurate determination of the health condition of the driver may be possible.

Additionally, or alternatively to the third system 50, the third data 3 may be from different systems of the vehicle 10. For example, the third data 3 may be based on the driver input on the driver control interface 42 and/or a road detection system, e.g., including a camera and/or sensor, configured for detecting lanes on the road travelled by the vehicle 10. Thereby, based on the steering behavior of the driver, as may be determined based on the driver input on the driver control interface 42, or lane switch behavior, as may be determined based on the detection of lanes travelled by the vehicle 10 from the road detection system, an erratic driving behavior of the driver may be determined, which may be indicative of the impairment of the driver.

Then, in a fourth step 108 of method 100, based on the first data 1, second data 2, and third data 3, an unintended acceleration is detected by the data processing apparatus 20. For example, for each one of the data 1, 2, 3, there may be at least one condition to be satisfied to detect to unintended acceleration.

Then, in a fifth step 110 of method 100, the data processing apparatus 20 may determine and/or provide vehicle control data 4 configured for being used by the vehicle 10, specifically the second system 40 to decelerate the vehicle 10 upon detecting the unintended deceleration. For example, the vehicle control system 48 may be configured for at least partially autonomously controlling the vehicle 10, including raking out an emergency braking maneuver based on the vehicle control data 4, thereby preventing further accidents.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. The mentioning of steps herein as first, second, third etc. is only exemplary in its order and non-limiting. Any reference signs in the claims should not be construed as limiting the scope of the claims.

### LIST OF REFERENCE SIGNS

- 1: first data
- 2: second data
- 3: third data
- 4: vehicle control data
- 10: vehicle
- 20: data processing apparatus
- 22: processor
- 24: computer program product
- 30: first system
- 32: sensor
- 34: actuator
- 40: second system
- 42: vehicle control interface
- 44: acceleration pedal
- 46: steering wheel
- 48: vehicle control system
- 50: third system
- 52: driver monitoring system
- 54: wearable device
- 100: method
- 102-110: steps

## Claims

1. A method (100) for detecting an unintended acceleration of a vehicle (10), the method (100) comprising:
- obtaining first data (1) indicative of an accident of the vehicle (10),
- obtaining second data (2) indicative of an acceleration of the vehicle (10) after the accident, and
- detecting the unintended acceleration based on the first data (1) and the second data (2).

2. The method (100) of claim 1, the unintended acceleration being detected if at least one first condition is satisfied by the first data (1) and at least one second condition is satisfied by the second data (2), the at least one first condition being indicative of at least one of a type and number of sensors (32) and/or actuators (34) of the vehicle (10) being triggered in response to the accident, and the at least one second condition being indicative of at least one of a magnitude and duration of an acceleration.

3. The method (100) of claim 1, the method (100) further comprising obtaining third data (3) indicative of a driver of the vehicle (10) being impaired to drive the vehicle (10), the detecting of the unintended acceleration being further based on the third data (3).

4. The method (100) of claim 3, the unintended acceleration being detected if at least one first condition is satisfied by the first data (1), at least one second condition is satisfied by the second data (2) and at least one third condition is satisfied by the third data (3), the at least one first condition being indicative of at least one of a type and number of sensors (32) and/or actuators (34) of the vehicle (10) being triggered in response to the accident, the at least one second condition being indicative of one of a magnitude and duration of an acceleration, and the at least one third condition being indicative of at least one of a magnitude and duration of the impairment of the driver.

5. The method (100) of claim 3 or 4, the third data (3) being based on a determination of a health condition of the driver.

6. The method (100) of claim 5, the health condition of the driver being determined by at least one of a driver monitoring system (52) of the vehicle (10) and a wearable device (54) communicatively couplable with the vehicle (10).

7. The method (100) of any one of claims 3 to 6, the third data (3) being based on an observation of the driving behavior of the driver of the vehicle (10).

8. The method (100) of any one of the previous claims, the second data (2) being based on a processing of a driver input on a vehicle control interface (42) of the vehicle (10).

9. The method (100) of claim 8, the driver input being at least one of an actuation of an acceleration pedal (44) of the vehicle control interface (42) and a steering of a steering wheel (46) of the vehicle control interface (42).

10. The method (100) of any one of the previous claims, the second data (2) being based on an acceleration control request by a vehicle control system (48) of the vehicle, the vehicle control system (48) being configured for at least partially autonomously controlling the vehicle (10).

11. The method (100) of claim 10, the acceleration control request being a cruise control request from a cruise control of the vehicle control system (48).

12. The method (100) of any one of the previous claims, the method (100) further comprising providing vehicle control data (4) configured for being used by the vehicle (10) to decelerate the vehicle (10) upon detecting the unintended deceleration.

13. A computer program product (24) comprising instructions which, when the program is executed by a computer, cause the computer to carry out the method (100) of any one of the previous claims.

14. A data processing apparatus (20) comprising means for carrying out the method (100) of any one of claims 1 to 12.

15. A vehicle (10) comprising the data processing apparatus (20) of claim 14.

## Amended claims

### Amended claims in accordance with Rule 137(2) EPC.

1. A method (100) for detecting an unintended acceleration of a vehicle (10), the method (100) comprising:
- obtaining first data (1) indicative of an accident of the vehicle (10),
- obtaining second data (2) indicative of an acceleration of the vehicle (10) after the accident, and
- detecting the unintended acceleration based on the first data (1) and the second data (2), the method being **characterized in** at least one of the following:
o the method (100) further comprising obtaining third data (3) indicative of a driver of the vehicle (10) being impaired to drive the vehicle (10), the detecting of the unintended acceleration being further based on the third data (3);
o the second data (2) being based on a processing of a driver input on a vehicle control interface (42) of the vehicle (10), the driver input being at least one of an actuation of an acceleration pedal (44) of the vehicle control interface (42) and a steering of a steering wheel (46) of the vehicle control interface (42);
o the second data (2) being based on an acceleration control request by a vehicle control system (48) of the vehicle, the vehicle control system (48) being configured for at least partially autonomously controlling the vehicle (10);
o the method (100) further comprising providing vehicle control data (4) configured for being used by the vehicle (10) to decelerate the vehicle (10) upon detecting the unintended deceleration.

2. The method (100) of claim 1, the unintended acceleration being detected if at least one first condition is satisfied by the first data (1), at least one second condition is satisfied by the second data (2) and at least one third condition is satisfied by the third data (3), the at least one first condition being indicative of at least one of a type and number of sensors (32) and/or actuators (34) of the vehicle (10) being triggered in response to the accident, the at least one second condition being indicative of one of a magnitude and duration of an acceleration, and the at least one third condition being indicative of at least one of a magnitude and duration of the impairment of the driver.

3. The method (100) of claim 1 or 2, the third data (3) being based on a determination of a health condition of the driver.

4. The method (100) of claim 3, the health condition of the driver being determined by at least one of a driver monitoring system (52) of the vehicle (10) and a wearable device (54) communicatively couplable with the vehicle (10).

5. The method (100) of any one of the previous claims, the third data (3) being based on an observation of the driving behavior of the driver of the vehicle (10).

6. The method (100) of any one of the previous claims, the acceleration control request being a cruise control request from a cruise control of the vehicle control system (48).

7. A computer program product (24) comprising instructions which, when the program is executed by a computer, cause the computer to carry out the method (100) of any one of the previous claims.

8. A data processing apparatus (20) comprising means for carrying out the method (100) of any one of claims 1 to 6.

9. A vehicle (10) comprising the data processing apparatus (20) of claim 8.
